Europäisches Patentamt

(19) European Patent Office

Office européen des brevets

(11) Publication number: **0 116 997**
**B1**

(12) **EUROPEAN PATENT SPECIFICATION**

(45) Date of publication of patent specification: **27.04.88**

(51) Int. Cl.⁴: **B 60 C 11/04**

(21) Application number: **84200177.8**

(22) Date of filing: **09.02.84**

(54) **A pneumatic aircraft tire.**

(30) Priority: **09.02.83 US 465216**

(43) Date of publication of application:
**29.08.84 Bulletin 84/35**

(45) Publication of the grant of the patent:
**27.04.88 Bulletin 88/17**

(84) Designated Contracting States:
**DE FR GB IT LU NL**

(56) References cited:
**EP-A-0 056 457**
**FR-A-2 343 617**
**FR-A-2 483 332**
**GB-A-2 077 671**
**LU-A- 68 646**

(73) Proprietor: **THE GOODYEAR TIRE & RUBBER COMPANY**
**1144 East Market Street**
**Akron, Ohio 44316-0001 (US)**

(72) Inventor: **Majerus, Norbert**
**967 Hampton Ridge**
**Akron Ohio 44313 (US)**

(74) Representative: **Weyland, Joseph Jean Pierre**
**Goodyear Technical Center Luxembourg Patent**
**Department Avenue Gordon Smith**
**L-7750 Colmar-Berg (LU)**

Courier Press, Leamington Spa, England.

## Description

The present invention relates to pneumatic tires specifically designed, constructed and intended for use on aircraft. The present invention is particularly useful on high speed aircraft having high landing or take-off speeds.

In the prior art (see e.g. LU—A—68646, corresponding with the preamble of claim 1) aircraft tires have generally been provided with a plurality of circumferentially closely spaced grooves and some axially extending lateral grooves. This type of construction was necessary in order to provide acceptable wet traction performance, cooling characteristics and a durable tire construction.

Applicant has invented a new tire construction which provides highly durable characteristics and improved tread wear while maintaining the wet and dry traction characteristics of the tire. According to the invention a pneumatic aircraft tire of the kind set forth is characterized in that said rib portion consists of a single uninterrupted rib.

Description of the drawings

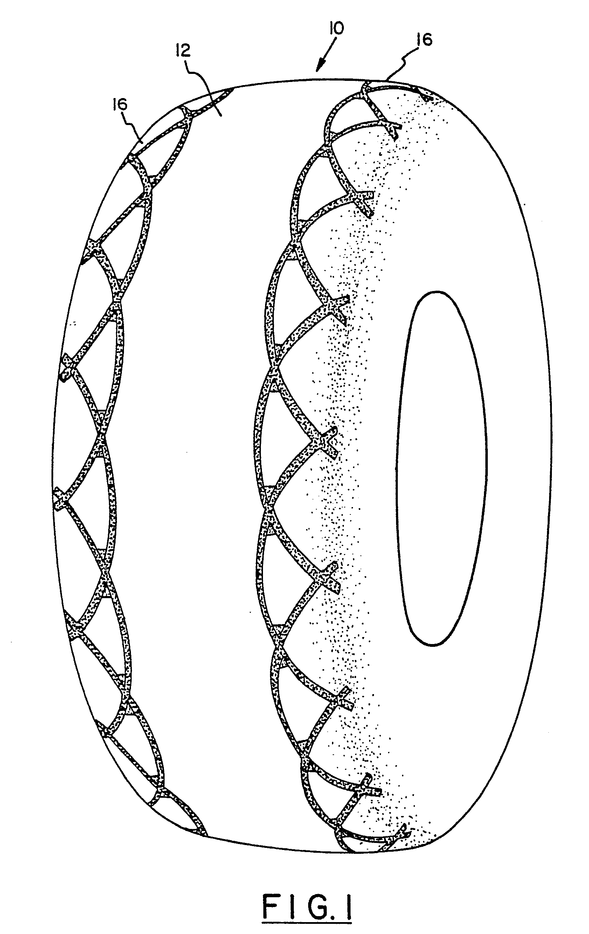

Referring to figure 1, there is illustrated a perspective view of a tire constructed in accordance with the present invention;

Figure 2 is an enlarged fragmentary plan view of the tire tread of figure 1;

Figure 2A is a partial cross-sectional view of the tire tread of figure 2 taken along line 2A—2A.

Figure 3 illustrates an enlarged fragmentary plan view of a tire having a modified tread pattern made in accordance with the present invention;

Figure 4 is an enlarged fragmentary plan view of a tire having yet another modified form of a tread pattern made in accordance with the present invention; and

Figure 5 is an enlarged fragmentary plan view of a tire illustrating yet still another modified tread pattern made in accordance with the present invention.

Detailed description of the invention

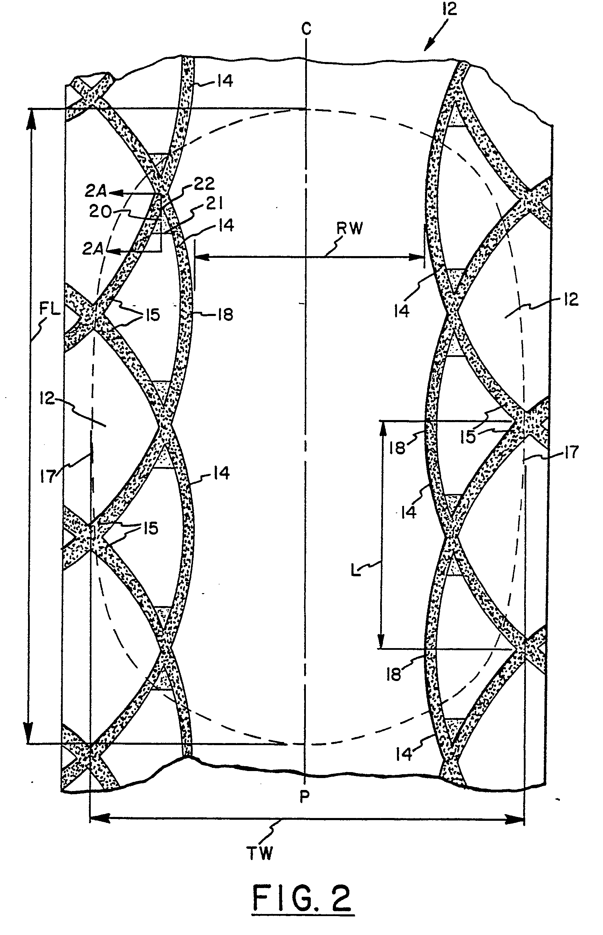

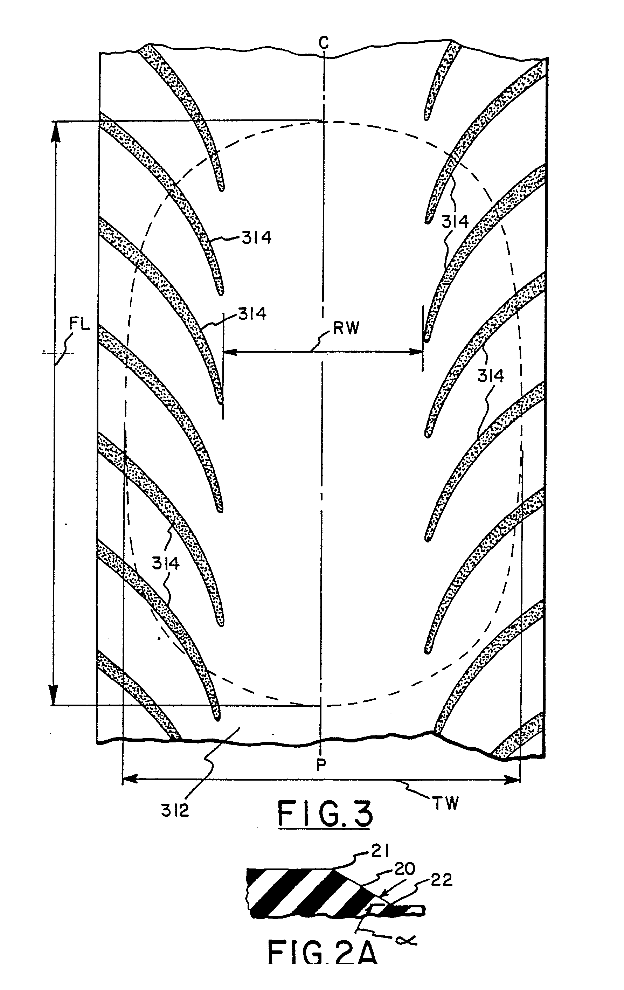

Referring to figures 1 and 2, there is illustrated an aircraft tire made in accordance with the present invention. The tire 10 is provided with a ground-engaging tread portion 12. The dash line illustrated in figure 2 represents the outline configuration of the footprint of the tire as taken from the tire inflated to rated inflation pressure and at rated load. The tread 12 has a tread with TW. For the purposes of this invention, the tread width TW is the maximum axial distance taken from the footprint of the tire at rated inflation and load and measured perpendicular to the mid-circumferential centerplane CP of the tire.

The tread 12 is provided with a plurality of axially extending grooves 14 disposed in the lateral or shoulder regions 16 of the tire. The axially inner ends 18 of grooves 14 which are disposed on the opposite side of the mid-circumferential centerplane are disposed axially apart a distance RW of at least 40% of the tread width TW and a distance no greater than 80% of the tread width TW. Preferably, between 55% and 75% of the tread width TW. In the particular embodiment illustrated, the distance RW is approximately 56%. A sufficient number of grooves 14 is provided so that the net to gross of the tread in the footprint area is at least .90 and not greater than .97 preferably, at least .92, most preferably between .95 and .97. It is preferable to have the net to gross as high as possible to provide increased durability and tread wear. For the purposes of this invention, the net to gross of the tread is defined as the area of ground-engaging tread portion which comes into contact with the ground as divided by the total area of the tread footprint.

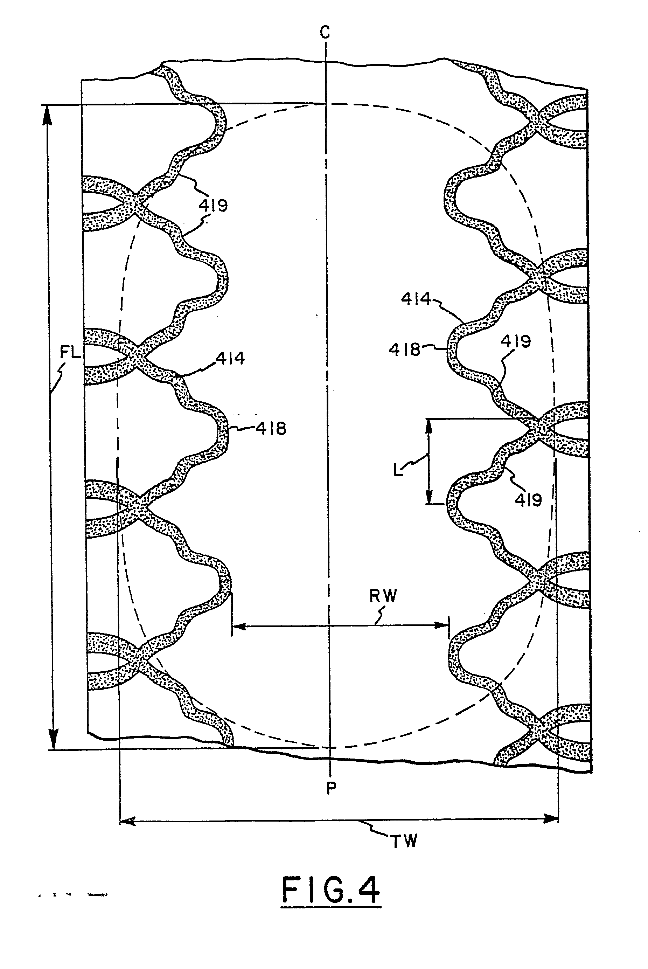

In the particular embodiment illustrated, the grooves 14 at their axially outer ends 15 overlap in a circumferential direction with the next circumferentially adjacent groove 14. In order to minimize hydroplaning and maintain wet and dry traction performance, each groove 14 extends from the axially innermost point 18 axially outward to the tread edge 17 such that the circumferential length L of groove 14 measured from its axially innermost point 18 to its axially outermost point 19 at the tread edge in the footprint is no greater than 100% of the footprint length FL. Preferably, between 25% and 75% of the footprint length FL. In the particular embodiment, L is about 35% of FL. For the purposes of this invention, the footprint length FL is the maximum length of the footprint as measured parallel to the mid-circumferential centerplane CP of the tire. In the particular embodiment illustrated, the grooves 14 are symetrical about their radially inner point 18 and therefore have a circumferential length of 2L so as to provide a non-directional tire. However, the present invention need not be symetrical but may comprise a plurality of parallel arcuate grooves for example as is illustrated in figure 3. Preferably the grooves 14 extend axially outwardly to the tread edge 17 in a smooth continuous manner as illustrated, increasing in axial orientation as they approach the tread edge. In the embodiment illustrated, the grooves 14 take a substantially (arcuate) or elliptical path from its axially inner end to the tread edge. However, the present invention is not limited to such. The grooves 14 may extend axially outward toward the tread edge in any desired manner, so long as the groove 14 does not have any portion which extends axially inwardly. Referring to figure 4, there is illustrated a modified form of the present invention where grooves 414 textend from the axially inner end 418 (axially) outwardly in a substantially S shaped path having a substantially circumferentially extending portion 419 in the center. This center portion 419 does not extend in a direction which would make it come closer to the centerplane CP of the tire. If such a configuration is selected, this substantially straight portion 419 should preferably be no greater than 50% of the circumferential length L of groove 414. Other modifications not illustrated are also contemplated, for example, the grooves may extend at any angle to the mid-circumferential centerplane CP, including at an angle substantially perpendicular to the mid-circumferential centerplane CP. However, as previously stated, the axially extending grooves preferably extend to the tread edge in an arcuate manner.

As illustrated in figures 1 and 2, the grooves 14 overlap one another to form apexes 20. In such cases where circumferentially adjacent grooves 14 overlap the portion of block formed at the apex are preferably beveled as illustrated in figure 2A wherein the apex 20 at point 21 reduces to substantially a zero height at the point 22 where the grooves 14 converge. The vertical angle $\alpha$ formed by this beveled portion 23 should be such so as to avoid sharp confrontation as it enters the footprint. Generally less than about 75°. In the particular embodiment illustrated, the angle $\alpha$ is approximately 45°.

The groove 14 illustrated has a width $W_1$ at its axially inner end 18 which increases to a width of $W_2$ as it approaches the tread edge 15. The width $W_2$ of the axially outer end at the tread edge of groove 14 is no greater than three times that of the width $W_1$ at the axially innermost point 18, preferably no greater than two to one. Additionally, the depth of groove 14 at the axially innermost point 18 is greater than the depth in the shoulder portion. Preferably the volume in the groove from 18 to the tread edge is substantially constant. Accordingly, the depth of the groove 14 is continuously decreasing as it approaches the tread edge. This type of groove configuration provides for more uniform wear as the tread is used since the axially innermost portion of the tread 12 wears at a faster rate than does the tread at its lateral edge and maintains water channeling passages in the footprint of the tire throughout its entire wear period.

The ground-engaging tread 12 is preferably made of an elastomeric material such that the elastomeric material has a 300% modulus of at least 6 MPa (Mega Pascals), a tensile strength of at least 12 MPa and an elongation of at least 300% and as measured by ASTM procedure D412. Additionally, it is desirable that the elastomeric material have a hot rebound of at least 60% as measured per ASTM D1054. Additionally, the dynamic modulus of the elastomeric material is at least 5 MPa (5 Mega Pascals) as measured per ASTM D2231 on Goodyear's vibrotester. Applicant has found that high speed aircraft tires, (tires that exceed speeds of 290 Km per hour during take off) preferably have a tread portion made of an elastomeric material which has:

a 300% modulus of 12 MPa, modulus of 12 MPa tensile strength of 20 MPa,
   elongation of at least 500%,
   a hot rebound of 75%,
   a Goodrich blow out value of 20 minutes,
   a Goodrich flex value of 30°C. per 15 minutes,
   a dynamic modulus of 7 MPa,
   tear resistance of 15 KN/m and
   Demattia flex of 10 hrs.

The 300% modulus, tensile strength and elongation being determined by ASTM D412, the hot rebound by ASTM 1054, dynamic modulus by ASTM 2231, Goodrich blow out by ASTM D623A and Demattia flex by ASTM D813.

Applicant has found that a tire made in accordance with the present invention has increased wear capabilities of up to 25% or 30% while at the same time maintaining or improving wet and dry traction characteristics. That is, the tire would be capable of completing a 25—30% greater number of landing cycles. Additionally, it is believed that a tire constructed in accordance with the present invention has improved tread wear on cornering and sharp turns that are required of aircraft during taxiing. In the prior art it was believed that if the grooves in the central portion of the tire were eliminated or reduced, the wear properties of the tire and wet and dry traction performance characteristics of an aircraft tire would be reduced. Applicant has quite unexpectedly found that by providing a wide circumferential rib in the central portion of the tire and axially extending ribs in the lateral regions of the tread portion, the wear performance characteristics could be significantly improved while maintaining or improving in some respects the performance handling characteristics such as wet and dry traction.

As previously stated, figure 3 illustrates a modified form of the present invention. In figure 3 there is provided a plurality of grooves 314. The grooves 314 are similar to grooves 14 except that the grooves extend only in one circumferential direction. The tread 312 of this tire is identical in all other respects with regard to tire 10 of figures 1 and 2.

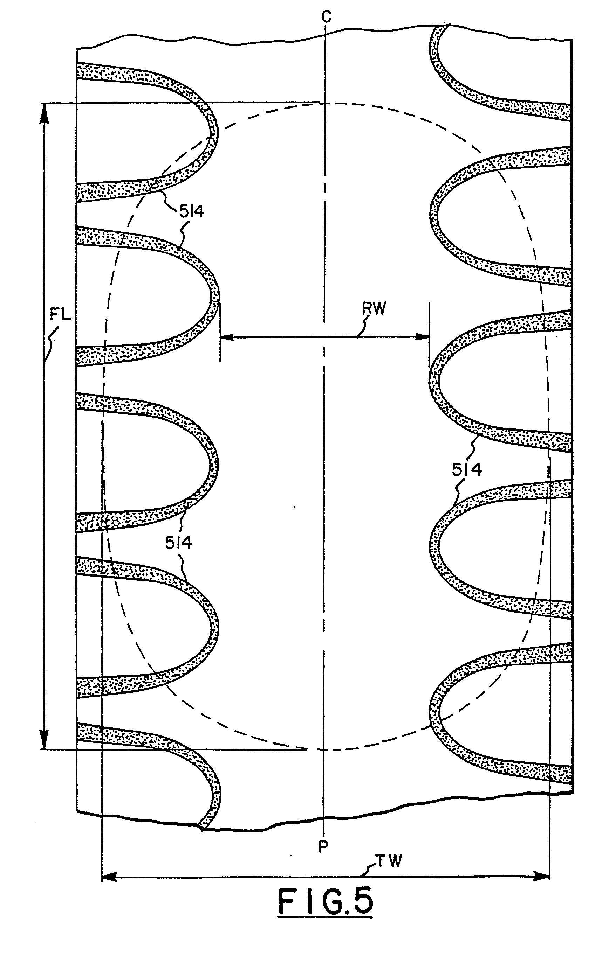

Referring to figure 5, there is illustrated yet another modified form of the present invention wherein the tire is provided with a plurality of grooves 514 in the shoulder portions. This tire is distinguished from tire 10 of figure 1 in that the grooves 314 do not overlap as do the grooves 14 of figure 1. A sufficient number of grooves 314 are provided to meet the net to gross limitation in the footprint of the tire.

**Claims**

1. A pneumatic aircraft tire (10) having a ground engaging tread portion (12, 312) provided with a plurality of axially extending grooves (14, 314, 414, 514) disposed in each of the lateral portions (16) of the tread portion the axially innermost points (18, 48) of the grooves being disposed on opposite sides of the mid circumferential centerplane (C—P) and being axially spaced apart so as to form a circumferentially continuous rib portion therebetween having an axial width (RW) of at least 40% of the tread width (TW), each of said grooves extending from its axially innermost point to the tread edge (17) following a continuous axial path, said path having a circumferential length (L) no greater than 100% of the tread footprint length (FL), characterized in that said rib portion consists of a single uninterrupted rib.

2. A pneumatic aircraft tire according to claim 1 further characterized in that the elastomeric material forming said tread portion has a 300% modulus of at least 6 MPa, tensile strength of at least 12 MPa and a hot rebound of at least 60% and a dynamic modulus of at least 5 MPa.

3. A pneumatic aircraft tire according to claim 1 further characterized by said rib having an axial width of at least 55% of the tread width.

4. A pneumatic aircraft tire according to claim 1 further characterized in that the rib has an axial width of approximately 56%.

5. A pneumatic aircraft tire according to claim 1 further characterized in that the net to gross of said tread taken from the footprint of the tire is at least .90 but not greater than .97.

6. A pneumatic aircraft tire according to claim 1 further characterized in that the net to gross of said tread taken from the footprint of the tire is at least .95 but not greater than .97.

7. A pneumatic aircraft tire according to claim 1 further characterized in that said grooves in said shoulder portion overlap.

8. A pneumatic aircraft tire according to claim 7 further characterized in that the apex (20) formed by the overlapped portion is beveled.

## Patentansprüche

1. Flugzeugluftreifen (10) mit einem den Boden berührenden Laufflächenabschnitt (12, 312), der mit einer Vielzahl sich in Axialrichtung erstreckender Rillen (14, 314, 414, 514) ausgebildet ist, die in jedem der seitlichen Abschnitte (16) des Laufflächenabschnitts angeordnet sind, wobei die axial am weitesten innen liegenden Punkte (18, 48) der Rillen an gegenüberliegenden Seiten der mittleren Umfangsebene (Äquatorialebene) (C—P) angeordnet sind, und wobei die Rillen in Axialrichtung voneinander beabstandet sind, um einen über den Umfang zusammenhängend verlaufenden Rippenabschnitt dazwischen auszubilden, der eine axiale Breite (RW) von wenigstens 40% der Laufflächenbreite (TW) aufweist, und wobei jede der Rillen sich von ihrem in Axialrichtung am weitesten innen liegenden Punkt zu dem Laufflächenrand (17) einem zusammenhängenden axialen Weg folgend erstreckt, wobei der Weg eine Länge (L) in Umfangsrichtung von nicht mehr als 100% der Länge (FL) der Aufstandsfläche der Lauffläche aufweist, dadurch gekennzeichnet, daß der Rippenabschnitt aus einer einzigen ununterbrochenen Rippe besteht.

2. Flugzeugluftreifen nach Anspruch 1, dadurch gekennzeichnet, daß das elastomere Material, das den Laufflächenabschnitt bildet, einen 300% Modulus von wenigstens 6 mPa, eine Zugfestigkeit von wenigstens 12 mPa, einen Heißrückprallwert von wenigstens 60% und einen dynamischen Modulus von wenigstens 5 mPa aufweist.

3. Flugzeugluftreifen nach Anspruch 1, dadurch gekennzeichnet, daß die Rippe eine axiale Breite von wenigstens 55% der Laufflächenbreite aufweist.

4. Flugzeugluftreifen nach Anspruch 1, dadurch gekennzeichnet, daß die Rippe eine axiale Breite von etwa 56% aufweist.

5. Flugzeugluftreifen nach Anspruch 1, dadurch gekennzeichnet, daß das Netto-Brutto-Verhältnis der Lauffläche genommen in der Aufstandsfläche des Reifens wenigstens 0,90 aber nicht größer als 0,97 ist.

6. Flugzeugluftreifen nach Anspruch 1, dadurch gekennzeichnet, daß das Nett-Brutto-Verhältnis der Lauffläche genommen in der Aufstandsfläche des Reifens wenigstens 0,95 aber nicht größer als 0,97 ist.

7. Flugzeugluftreifen nach Anspruch 1, dadurch gekennzeichnet, daß die Rillen in dem Schulterbereich sich überlappen.

8. Flugzeugluftreifen nach Anspruch 7, dadurch gekennzeichnet, daß der Scheitel (20), der von den sich überlappenden Abschnitten gebildet wird, abgeschrägt ist.

## Revendications

1. Bandage pneumatique d'avion (10) comportant une bande de roulement (12, 312) venant s'engager sur le sol et comportant plusieurs rainures axiales (14, 314, 414, 514) disposées dans chacune de ses parties latérales (16), les points intérieurs axiaux extrêmes (18, 48) des rainures étant disposés sur des côtés opposés du plan central circonférentiel médian (C—P), ces rainures étant espacées axialement l'une de l'autre de façon à former, entre elles, une nervure circonférentiellement continue ayant une largeur axiale (RW) d'au moins 40% de la largeur de bande de roulement (TW), chacune de ces rainures s'étendant depuis son point intérieur axial extrême jusqu'au bord (17) de la bande de roulement en suivant un parcours axial continu, ce parcours ayant une longueur circonférentielle (L) ne dépassant pas 100% de la longueur d'empreinte (FL) de la bande de roulement, caractérisé en ce que cette nervure est constituée d'une seule nervure ininterrompue.

2. Bandage pneumatique d'avion selon la revendication 1, caractérisé en ce que la matière élastomère constituant la bande de roulement a un module à 300% d'au moins 6 MPa, une résistance à la traction d'au moins 12 MPa et un rebond à chaud d'au moins 60%, ainsi qu'un module dynamique d'au moins 5 MPa.

3. Bandage pneumatique d'avion selon la revendication 1, caractérisé en ce que la nervure précitée a une largeur axiale atteignant au moins 55% de la largeur de la bande de roulement.

4. Bandage pneumatique d'avion selon la revendication 1, caractérisé en ce que la nervure a une largeur axiale d'environ 56%.

5. Bandage pneumatique d'avion selon la revendication 1, caractérisé en ce que le rapport net/brut de la bande de roulement, considéré d'après l'empreinte du bandage pneumatique, est d'au moins 0,90, mais ne dépasse pas 0,97.

6. Bandage pneumatique d'avion selon la revendication 1, caractérisé en ce que le rapport net/brut de la bande de roulement considéré d'après l'empreinte du bandage pneumatique, est d'au moins 0,95, mais ne dépasse pas 0,97.

7. Bandage pneumatique d'avion selon la revendication 1, caractérisé en ce que les rainures se chevauchent dans la partie d'épaulement.

8. Bandage pneumatique d'avion selon la revendication 7, caractérisé en ce que le sommet (20) formé par la partie de chevauchement est chanfreiné.

$\underline{F\ I\ G.\ I}$

0 116 997

FIG. 2

2

FIG.3

FIG.2A

3

# FIG.4

FIG.5